# EUROPEAN PATENT SPECIFICATION

(11) **EP 2 338 244 B1**
(45) Date of publication and mention of the grant of the patent: **16.06.2021**
(21) Application number: 09813574.2
(22) Date of filing: 10.09.2009
(51) Int. Cl.: H04L 29/06, G06F 21/60, G06F 21/85

(54) **USE OF A SECURE ELEMENT FOR WRITING TO AND READING FROM MACHINE READABLE CREDENTIALS**
VERWENDUNG EINES SICHEREN ELEMENTS ZUM SCHREIBEN UND LESEN MASCHINENLESBARER BERECHTIGUNGEN
UTILISATION D'UN ÉLÉMENT SÉCURISÉ POUR ÉCRIRE ET LIRE DES JUSTIFICATIFS POUVANT ÊTRE LUS PAR ORDINATEUR

(30) Priority: 12.09.2008 US 96689 P
(43) Date of publication of application: 29.06.2011
(73) Proprietor: ASSA ABLOY AB, 107 23 Stockholm (SE)
(72) Inventor: GUTHERY, Scott, B., Chestnut Hill, MA 02467 (US)
(74) Representative: Kramer Barske Schmidtchen Patentanwälte PartG mbB
(86) International application number: PCT/US2009/056447
(87) International publication number: WO 2010/030731

(56) References cited:
- EP-A2- 0 668 579
- WO-A1-98/52136
- WO-A1-2006/013162
- GB-A- 2 358 500
- US-A1- 2004 238 627
- US-A1- 2007 249 323
- US-A1- 2007 282 951
- US-A1- 2008 204 429
- None

## Description

### FIELD OF THE INVENTION

The present invention is generally directed to secure access systems and more particularly to secure encoding of credential cards.

### BACKGROUND

RFID transponder-based credential cards such as HID Global's HID Prox™ and iCLASS®, credential cards typically contain identification data, such as a card number and site code as well as additional data, e.g., error detection and correction. Devices referred to as readers or reader/writers are employed to read data from and/or write data to these RFID credential cards although these concepts also apply to other types of machine-readable credentials such as magnetic stripe cards. Although the data storage locations in these credentials can be read and/or written by these devices, typically a device called a programmer is used to initially write sensitive data to a credential card. Other commonly used names include field programmer and encoder. The process of writing initialization data to previously unused credential cards is typically called provisioning.

Any device used to either read from or write data to machine-readable credentials shall be referred to as an RWD (Read/Write Device) and, depending on the application, may be a stand-alone device or embedded into another device such as a printer or time clock running a program in firmware possibly under the control of a real-time operating system.

Typically RWDs are connected to a host device and this host device may be a computer running a program on a general-purpose, multi-programming operating system such as Windows, Linux, or Mac O/S. A device acting as a host shall be referred to as an initiator.

In the current state of the art, the encoding rules that define how data is stored in a credential card, any cryptographic keys required to access the credential card, where the data is to be stored in the credential card, and other secret, sensitive and proprietary information typically resides in the initiator. When the data is located on the initiator, this sensitive data is easily compromised. For example, if the encoding rules are proprietary and trade secrets of the manufacturer or the issuer of the credential card, then a security breach may compromise the manufacturer's or the issuer's future source of revenue.

GB2358500 discloses a terminal 42 that is provided which contains a processor 44. The terminal 42 has an interface 45 for receiving a target smart card 41. The target smart card 41 is programmed with a load data/application derived from a generic application and personalising data using the combination of the processor 44 and the terminal 42. The combination may be made according to predetermined rules. The generic application may be stored as application program units (APDUs). The personalising data may be stored in an encrypted form. The processor 44 may be a smart card chip incorporating logical and other security/encryption features including utilization of session keys or application certificates. The processor is preferably embedded in a smart card carrier and received via an additional interface 47.

EP0668579 discloses systems and methods for providing secure electronic financial transactions characterized in that money is electronically stored on a plurality of smart cards. A plurality of smart cards are each equipped with an electronic security wall having a closed state and an open state. In the closed state, the smart card is disabled from participating in financial transactions, and in the open state, the smart card may participate in financial transactions. A security key smart card is equipped with a first security key for changing the state of the electronic security wall from the open state to the closed state, and a second security key for changing the state of the electronic security wall from the closed state to the open state. Financial transactions include, for example, electronically transferring money between a bank center and a smart card; electronically transferring money between the first and second smart cards; checking the amount of money stored on a smart card; and adding interest to the amount of money stored on the smart card.

WO2006013162 discloses a method and a system for customizing electronic components, by substituting in a nonvolatile storage each one first secret key (Ks) with a second secret key (Ks'), using a secure authentication module automatically generating said second key after reconstructing the first key from an identifier of the component during customization, which consists in conditioning, on the authentication module side, the supply of the second key for a current component upon reception of a confirmation message for key substitution of at least one previous component.

WO9852136 discloses an electronic data access and retrieval system comprising at least first and second smart cards, a first card being encoded with digital data fields representative of predetermined information and a second card including authorization codes for enabling access to and authorized retrieval of selected information from digital data fields of the first card, and includes computer means including means for displaying the access data. A method is also disclosed of operating an electronic secured access verification display system for displaying an indication of permissible and non-permissible access to facility of authorized personnel and for verifying the identity of such personnel by providing IDENTITY SMART CARDS, one for each authorized person, and an ACCESS SMART CARD to each authorized operator of the system.

### SUMMARY

Therefore, one aspect of the present invention to use a intermediate secure element, such as an integrated circuit card, to store and utilize these secrets and rules (e.g., formats, cryptographic keys, encryption rules, and/or sensitive data) in order to read, write, and provision credentials while guaranteeing the security and privacy of these secrets and rules.

The present invention concerns a secure element according to claim 1, a system according to claim 6 and a method according to claim 11 . Other advantageous features can be found in the dependent claims.

Embodiments of the present invention allow for secure encoding of credential cards intermediated by a secure processing element that contains sensitive information such as cryptographic keys, data encoding rules and structures, encoder and encoding protocols, metering information, together with the program to perform communications with the credential card involving this data.

As described previously, RWDs are examples of devices that are capable of securely accessing the data storage area on credential cards in order to read data therefrom or write data thereto. These devices are employed when the machine-readable credential is being manufactured, initialized, personalized or read and/or written by means of a computer program running on a general-purpose, multi-programming operating system such as a Windows, Linux, or Mac 0/S.

In the case that a computer program running on a general-purpose, multi-programming operating system is being employed to move data to and from the machine readable credential, the sensitive data such as cryptographic keys and personal identification data is typically stored in the computing environment of the computer program. In this environment, sensitive data is susceptible to compromise and breach by other programs such as malware, spyware, software probes and debuggers running concurrently in the general purpose, multi-programming operating system.

In addition, this sensitive data may also be left behind in the computer such as in the memory or in the operating system swap files when the reading/writing program is terminated and even when the computer itself is turned off. In all these cases this sensitive data is subject to discovery and breach.

In addition to software vulnerabilities enabled by general purpose, multi-programming operating systems, sensitive data can be compromised by exploitation of the hardware platform executing and supporting the movement of data to and from the RWD. Devices such as hardware probes and environmental monitors can detect and even alter sensitive data.

Embodiments of the present invention propose the use of a secure element, e.g., an integrated circuit card, to contain both the sensitive data and the program used to provision the credential cards. As the program execution and hardware environment of an integrated circuit card are more secure against attack than a general purpose, multi-programming, operating system, the above short-comings of the current art are addressed.

In accordance with at least some embodiments of the present invention, a secure element is provided in accordance with claim 1.

In one aspect of the present invention, the provisioning program resides inside an integrated circuit card.

In one aspect of the present invention, the encoding rules are utilized by the encoding device to provision a credential card.

In one aspect of the present invention, the encoding rules are provided to the encoding device in response to the secure element receiving a request for the encoding rules.

In the present invention, the intermediate secure element is a peripheral device to the encoding device.

In one aspect of the present invention, the intermediate secure element comprises two communication channels, a first of the two channels being in communication with an initiator and a second of the two channels being in communication with a device comprising the encoding device. The first channel may comprise communication using a USB protocol and the second channel may comprise a communication using a serial communication protocol.

### BRIEF DESCRIPTION OF THE DRAWINGS

Fig. 1 depicts a first system configuration for writing data to and reading data from a credential card in accordance with at least some embodiments of the present invention;
Fig. 2 depicts a second system configuration for writing data to and reading data from a credential card in accordance with at least some embodiments of the present invention;
Fig. 3 depicts a third system configuration for writing data to and reading data from a credential card;
Fig. 4 depicts a fourth system configuration for writing data to and reading data from a credential card;
Fig. 5 depicts a fifth system configuration for writing data to and reading data from a credential card in accordance with at least some embodiments of the present invention; and
Fig. 6 depicts a sixth system configuration for writing data to and reading data from a credential card in accordance with at least some embodiments of the present invention.

### DETAILED DESCRIPTION

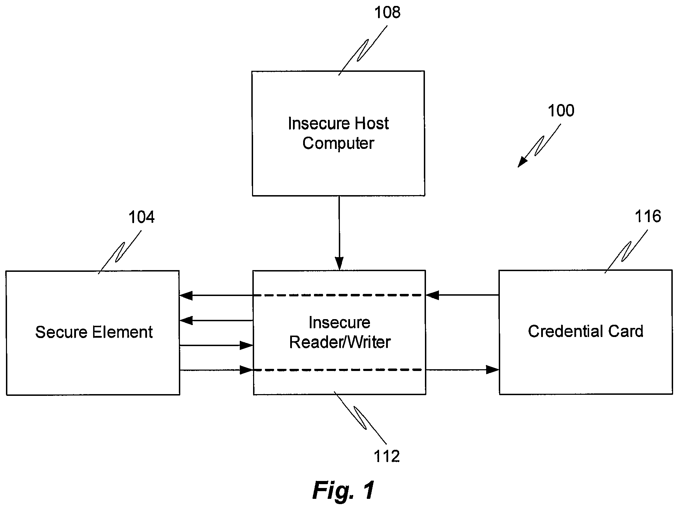

Referring initially to Fig. 1, a first configuration of a system 100 used to provision credential cards 116 will be described in accordance with at least some embodiments of the present invention. The system 100 may include a host or initiator computer 108 that is operated by a security administrator or similar type of security personnel. Exemplary types of hosts 108 include, but are not limited to, personal computers, laptops, and/or a hardware appliance such as a time clock. In some embodiments, the host or computer 108 is adapted to run a program on a general-purpose, multi-programming operating system such as Windows, Linux, or Mac O/S.

The host or computer 108 is in communication with an insecure reader/writer 112 that has the capability to read and write data from the credential card 116. The host or computer 108 as well as the reader/writer 112 are typically insecure in that data stored thereon may be relatively easily accessed by unauthorized persons. More specifically, while the host or computer 108 and reader/writer 112 may be utilized to initiate data reads/writes to credentials 116 using third party proprietary or sensitive data, the host or computer 108 and reader/writer 112 is not operated by the third party and, thus, may not employ security provisions in accordance with the third party's requirements.

Accordingly, embodiments of the present invention propose the use of an intermediate secure element 104 for interfacing with the insecure reader/writer 112. The intermediate secure element 104 may contain any proprietary, secret, or sensitive third party data and that data may be secured in accordance with the third party's requirements. In the configuration depicted in Fig. 1, a security administrator can interface with the host or computer 108 (for example using a graphical user interface) and the host or computer 108 is capable of communicating directly with the insecure reader/writer 112. The communications between the host or computer 108 and insecure reader/write 112 typically include instructions to initiate a read/write of data from/to the credential card 116.

Upon receiving such a command from the host or computer 108, the insecure reader/writer 112 is configured to communicate with the secure element 104 and retrieve the necessary secrets and/or rules to complete the data read/write.

In accordance with at least some embodiments of the present invention, the secure element 104 may correspond to an integrated circuit or circuit card that is insertable into the reader/writer 112. Once inserted into the reader/writer 112, the secure data and/or rules can be obtained from the secure element 104 (e.g., cryptographic keys, sensitive data, encoding rules and a provisioning program operable to access the encoding rules). The secure element 104 can then provide the sensitive data and the secure data and/or encoding rules to the reader/writer 112 via a secure communication channel and said sensitive data and rules can be used by the reader/writer 112 for reading data from or writing data to the credential card 116.

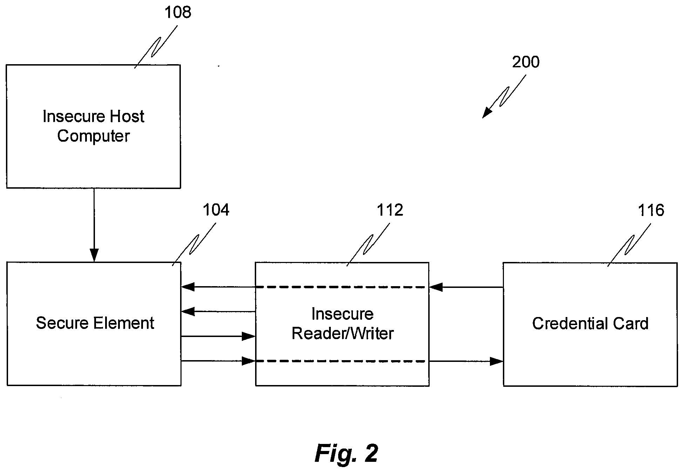

Referring now to Fig. 2, an alternative configuration of system 200 elements is shown in accordance with at least some embodiments of the present invention. In this particular configuration, the insecure host or computer 108 may communicate with the reader/writer 112 through the intermediate secure element 104. Thus, rather than sending a message directly to the read-er/writer 112 instructing it to obtain encoding rules from the secure element 104, the host or computer 108 can communicate directly with the secure element 104 and instruct the secure element 104 to retrieve sensitive data and encoding rules and provide said sensitive data and encoding rules to the reader/writer 112.

In the embodiment depicted in Fig. 2, the intermediate secure element may comprise two different communication channels. The first channel may be used to facilitate communications with the host or computer 108 while the second channel may be used to facilitate communications with the reader/writer 112. In accordance with at least some embodiments of the present invention, the first channel may comprise a USB communication protocol or similar communication protocol that is capable of facilitating communications with a host or computer 108 in a native format of the host or computer 108 and the second channel may comprise a serial communication protocol *(e.g.,* SCSI, RS-232, and RS-422).

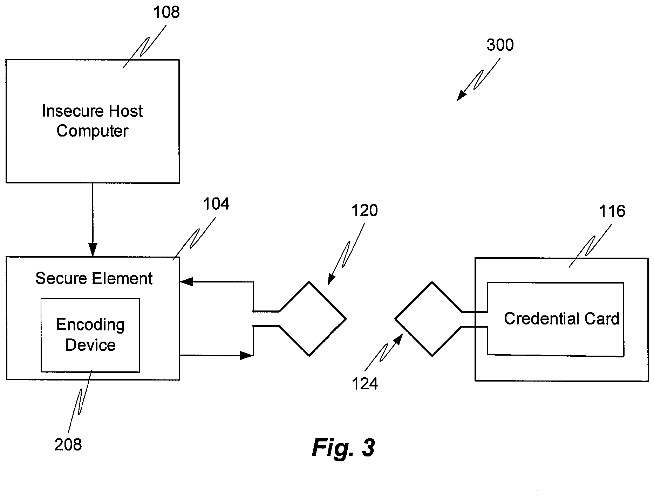

Fig. 3 depicts yet another alternative configuration of the system 300. In this particular configuration, the system 300 may utilize an intermediate secure element 104 that can communicate with the credential card 116 in the absence of a reader/writer 112.

The secure element 104 may include an encoding device 208 *(i.e.,* functionality of the reader/writer 112) and may also be provided with an antenna 120. The credential card 116 may also be provided with an antenna 124. Wireless communications between the secure element 104 and credential card 116 can be facilitated via the antennas 120, 124 using known wireless communication standards and techniques such as FSK, PSK, ASK, ISOIIEC 14443, ISOIIEC 15693, *etc.*

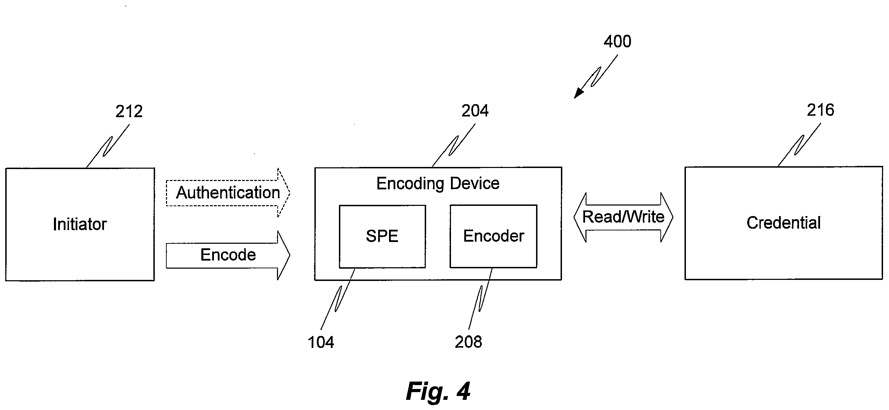

Fig. 4 depicts still another alternative configuration of the system 400. This particular embodiment shows an initiator 212 (which may be similar or identical) a host computer 208 in communication with an encoding device 204. The encoding device is capable of reading/writing data from/to the credential 216. The initiator 212 is generally similar or identical to the host or computer 108 and the encoding device 204 may be similar or identical to the reader/writer 112 depicted in Figs. 1-3.

As can be seen in Fig. 4, the encoding device may comprise a secure element 104, which is also referred to as a secure processing element or SPE, and an encoder 208. The internal secure element 104 may still contain generally secret or proprietary data (e.g., encoding rules, sensitive data, cryptographic keys, protocols to be used with initiator 212 and/or protocols to be used between the encoder 208 and credential 216) and the encoder 208 can be used to execute read/write operations of the encoding device 204. The encoder 208 is adapted to retrieve sensitive data and encoding rules from the intermediate secure element 104 prior to communicating with the credential 216. The communications between the secure element 104 and encoder 208 may be either wired *(e.g.,* USB, RS485, TTL, *etc.)* or wireless *(e.g.,* Bluetooth, Zigbee, Wi-Fi, ISOIIEC 14443, ISO/IEC 15693, NFC, *etc.)* communications.

In accordance with at least some embodiments of the present invention, the secure element 104 may include one or more of a contact smart card, a Subscriber Identity Module (SIM) card, a Security Authentication Module (SAM) card, a Trusted Platform Module (TPM), or any similar type of device. The secure element 104 may be integral to the encoder 208 or may be a peripheral device to the encoder 208.

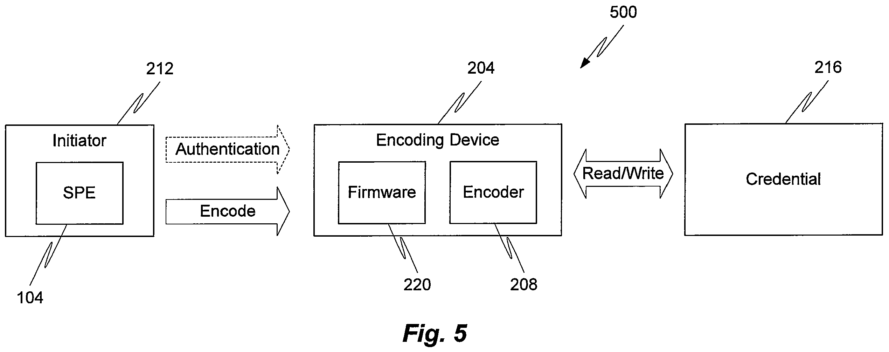

Fig. 5 depicts yet another alternative configuration of the system 500. Here system elements are configured in accordance with at least some embodiments of the present invention. The system 500 may include a intermediate secure element 104 in the initiator 212 and the encoding device may comprise one or more of an encoder 208 and firmware 220. Encoding rules and other sensitive data from the secure element 104 may be provided directly to the encoding device 204 using RF circuitry. Alternatively, or in addition, data from the secure element 104 may be provided to the embedded encoder 208 using the encoder's protocol *(e.g.,* ISO 7816). Alternatively, or in addition, data from the secure element 104 may be provided to the encoding device 204 using wired or wireless communications with the firmware 220 that is embedded in the device 204. Once the data from the secure element 104 is received at the encoding device 204, the encoder 208 can be configured to read/write data from/to the credential 216.

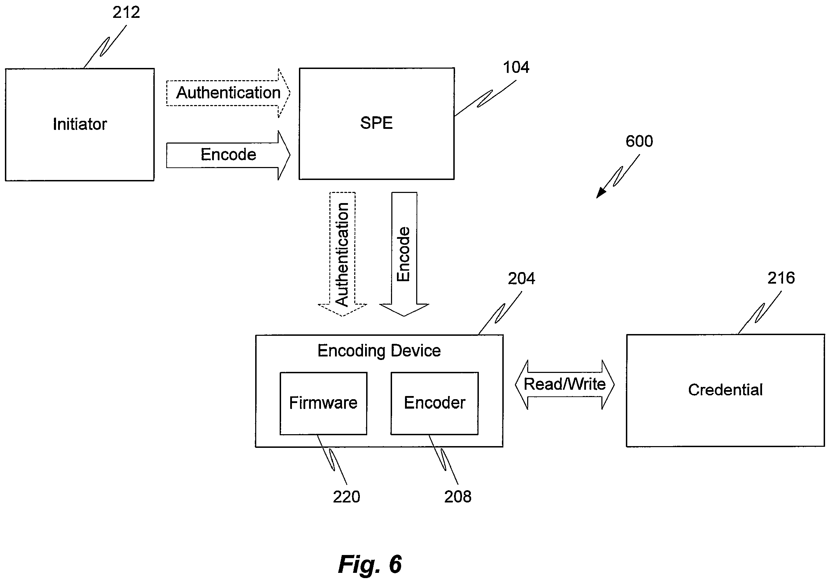

Fig. 6 depicts yet another alternative configuration of the system 600. Here, system elements are configured in accordance with at least some embodiments of the present invention. In this configuration the intermediate secure element 104 is separate from both the initiator 212 and encoding device 204 *(i.e.,* the secure element 104 is a stand-alone device). Communications from the initiator 212 to the encoding device 204 may flow through the secure element 104 which injects any secure data or encoding rules that is necessary for the encoder 208 to communicate with the credential 216. The data from the secure element 104 may be provided to the encoding device 204 in any number of different ways previously discussed in connection with Fig. 5.

As one exemplary application, and regardless of system configuration, embodiments of the present invention make use of the elevated security context available to programs executing within a secure element 104, such as an integrated circuit card, to provide a secure conduit between the provisioning program and the credential card being provisioned.

In accordance with at least some embodiments of the present invention, a provisioning program running in the secure element 104 accesses data stored also in the same secure element and:
- Outputs to the RWD commands to establish a communication channel between the RWD and the credential to be provisioned;
- Outputs to the RWD commands that establish a shared security context between the provisioning program running inside the secure element 104 and the credential being provisioned; and/or
- Outputs to the RWD commands to be relayed forward to the credential being provisioned. These commands which are executed inside the credential card achieve the provisioning of the credential card without exposing the data they convey due to the shared security context between the secure element 104 and the credential card.

It should be noted that the establishment of the shared security context may include authentication of the credential card by the provisioning program running inside the secure element 104 and authentication of the provisioning program running inside the secure element by the credential card.

In addition, digital rights management (DRM) may be employed so that only an allowed subset of sensitive data and encoding rules may be utilized. In addition, the secure element can contain metering data so that only a certain number of credentials can be encoded or deciphered. Of course the secure elements meters could be altered or changed using a secure interchange between itself and an initiator or even by using data that resides on a machine readable credential.

In addition to containing the sensitive data involved in a communication with a credential card and being able to create a secure channel between itself and the credential card in order to communicate this data directly to the credential card, the secure element 104 may also perform protocol and data translation services on the communication between the insecure host computer and the credential card. Of particular applicability for the current teaching are protocol and data translation services which are based on the sensitive data contained in the secure element 104.

One advantage offered by the present invention is that one need only provide an additional communication channel on the programmer/reader-writer/encoder to enhance the security of communication with credential cards. One does not need to modify the intrinsic functionality of existing programmer/reader-writer/encoder as it is being driven by the same set of commands as are currently sent to it from an initiator program running in an insecure execution environment.

The systems, methods and protocols of this invention can be implemented on a special purpose computer in addition to or in place of the described access control equipment, a programmed microprocessor or microcontroller and peripheral integrated circuit element(s), an ASIC or other integrated circuit, a digital signal processor, a hard-wired electronic or logic circuit such as discrete element circuit, a programmable logic device such as TPM, PLD, PLA, FPGA, PAL, a communications device, such as a server, personal computer, any comparable means, or the like. In general, any device capable of implementing a state machine that is in turn capable of implementing the methodology illustrated herein can be used to implement the various data messaging methods, protocols and techniques according to this invention.

Furthermore, the disclosed methods may be readily implemented in software. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized. The analysis systems, methods and protocols illustrated herein can be readily implemented in hardware and/or software using any known or later developed systems or structures, devices and/or software by those of ordinary skill in the applicable art from the functional description provided herein and with a general basic knowledge of the computer arts. Moreover, the disclosed methods may be readily implemented in software that can be stored on a storage medium, executed on a programmed general-purpose computer with the cooperation of a controller and memory, a special purpose computer, a microprocessor, or the like. In these instances, the systems and methods of this invention can be implemented as program embedded on personal computer such as a JAVA® or CGI script, as a resource residing on a server or computer workstation, as a routine embedded in a dedicated communication system or system component, or the like. The system can also be implemented by physically incorporating the system and/or method into a software and/or hardware system, such as the hardware and software systems of a communications device or system.

It is therefore apparent that there has been provided, in accordance with the present invention, systems, apparatuses and methods utilizing a secure element to facilitate provisioning of credential cards. While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the scope of this invention.

## Claims

1. A secure element (104) comprising:
information including sensitive data and encoding rules, wherein the encoding rules define how data is stored in a provisionable device;
the secure element (104) further comprising:
a provisioning program stored in a non-transitory medium (104) operable to access the information, provide the information via a secure communication channel to an encoding device (112, 208) in response to the secure element receiving a request for the encoding rules and sensitive data, and cause the encoding device to utilize the information to provision the sensitive data to the provisionable device (116),
wherein the secure element is a peripheral device to the encoding device.

2. The secure element of claim 1, wherein the provisioning program resides inside an integrated circuit.

3. The secure element of claim 1, wherein the provisionable device is a credential card.

4. The secure element of claim 1, wherein the secure element comprises two communication channels, a first of the two channels being in communication with an initiator (212) and a second of the two channels being in communication with a device (204) comprising the encoding device.

5. The secure element of claim 4, wherein the first channel uses a USB communication protocol and the second channel uses a serial communication protocol.

6. A system comprising:
an encoding device; and
a secure element as defined in one of the preceding claims.

7. The system of claim 6, wherein the provisionable device is a credential card (116).

8. The system of claim 7, wherein the encoding device is only allowed to provision a predetermined number of credential cards (116) before the secure element begins to restrict the encoding device's ability to provision credential cards (116).

9. The system of claim 6, further comprising:
an initiator (212) adapted to interface with an administrative user, wherein the initiator is further adapted to provide one or more messages to the encoding device instructing the encoding device to provision a credential.

10. The system of claim 9, wherein the secure element resides in the initiator and the initiator is capable of retrieving the encoding rules and providing the encoding rules to the encoding device via the secure communication channel.

11. A method that comprises:
receiving, at an encoding device, instructions to provision sensitive data to a provisionable device;
retrieving, by the encoding device, encoding rules and the sensitive data from a secure element via a secure communication channel, in response to the secure element receiving a request for the encoding rules and sensitive data, wherein the encoding rules define how data is stored in the provisionable device; and
using the information retrieved from the secure element to provision the sensitive data to the provisionable device,
wherein the secure element is a peripheral device to the encoding device.

## Patentansprüche

1. Sicheres Element (104) mit:
Information, die vertrauliche Daten und Kodierregeln aufweist, wobei die Kodierregeln definieren, wie Daten in einer konfigurierbaren Vorrichtung gespeichert werden;
bei dem das sichere Element (104) ferner aufweist:
ein Konfigurationsprogramm, das in einem nichtflüchtigen Medium (104) gespeichert ist und ausgebildet ist zum Zugreifen auf die Information, Bereitstellen der Information über einen sicheren Kommunikationskanal für eine Kodiervorrichtung (112, 208) ansprechend darauf, dass das sichere Element eine Anfrage nach den Kodierregeln und vertraulichen Daten empfängt, und Bewirken, dass die Kodiervorrichtung die Information zum Konfigurieren der konfigurierbaren Vorrichtung (116) mit den vertraulichen Daten verwendet,
wobei das sichere Element eine außerhalb der Kodiervorrichtung vorgesehene Vorrichtung ist.

2. Sicheres Element nach Anspruch 1, bei dem das Konfigurationsprogramm in einer integrierten Schaltung vorliegt.

3. Sicheres Element nach Anspruch 1, bei dem die konfigurierbare Vorrichtung eine Berechtigungskarte ist.

4. Sicheres Element nach Anspruch 1, bei dem das sichere Element zwei Kommunikationskanäle aufweist, von denen ein erster in Kommunikation mit einem Initiator (212) steht und ein zweiter in Kommunikation mit einer Vorrichtung (204) mit der Kodiervorrichtung steht.

5. Sicheres Element nach Anspruch 4, bei dem der erste Kanal ein USB-Kommunikationsprotokoll verwendet und der zweite Kanal ein serielles Kommunikationsprotokoll verwendet.

6. System mit:
einer Kodiervorrichtung; und
einem sicheren Element nach einem der vorhergehenden Ansprüche.

7. System nach Anspruch 6, bei dem die konfigurierbare Vorrichtung eine Berechtigungskarte (116) ist.

8. System nach Anspruch 7, bei dem die Kodiervorrichtung lediglich eine vorbestimmte Anzahl von Berechtigungskarten (116) konfigurieren darf, bevor das sichere Element damit beginnt, die Fähigkeit der Kodiervorrichtung, Berechtigungskarten (116) zu konfigurieren, zu begrenzen.

9. System nach Anspruch 6, ferner mit:
einem Initiator (212), der angepasst ist, über eine Schnittstelle mit einem Administrator verbunden zu werden, wobei der Initiator ferner angepasst ist zum Bereitstellen von einer oder mehreren Nachrichten für die Kodiervorrichtung, die die Kodiervorrichtung anweisen, eine Berechtigung zu konfigurieren.

10. System nach Anspruch 9, bei dem das sichere Element in dem Initiator vorliegt und der Initiator dazu in der Lage ist, die Kodierregeln abzurufen und die Kodierregeln über den sicheren Kommunikationskanal für die Kodiervorrichtung bereitzustellen.

11. Verfahren mit folgenden Schritten:
Empfangen, bei einer Kodiervorrichtung, von Anweisungen zum Konfigurieren einer konfigurierbaren Vorrichtung mit vertraulichen Daten;
Abrufen, durch die Kodiervorrichtung, von Kodierregeln und den vertraulichen Daten aus einem sicheren Element über einen sicheren Kommunikationskanal ansprechend darauf, dass das sichere Element eine Anfrage nach den Kodierregeln und vertraulichen Daten empfängt, wobei die Kodierregeln festlegen, wie Daten in der konfigurierbaren Vorrichtung gespeichert werden; und
Verwenden der von dem sicheren Element abgerufenen Information zum Konfigurieren der konfigurierbaren Vorrichtung mit den vertraulichen Daten,
wobei das sichere Element eine außerhalb der Kodiervorrichtung vorgesehene Vorrichtung ist.

## Revendications

1. Élément sécurisé (104) comprenant :
des informations comprenant des données sensibles et des règles de codage, dans lequel les règles de codage définissent la manière dont les données sont stockées dans un dispositif de provisionnement ;
l'élément sécurisé (104) comprenant en outre :
un programme de provisionnement stocké dans un support non-transitoire (104) utilisable pour accéder aux informations, fournit les informations via un canal de communication sécurisé à un dispositif de codage (112, 208) en réponse à l'élément sécurisé recevant une demande pour les règles de codage et les données sensibles, et fait en sorte que le dispositif de codage utilise les informations pour approvisionner les données sensibles au dispositif de provisionnement (116),
dans lequel l'élément sécurisé est un dispositif périphérique au dispositif de codage.

2. Élément sécurisé selon la revendication 1, dans lequel le programme de provisionnement réside à l'intérieur d'un circuit intégré.

3. Élément sécurisé selon la revendication 1, dans lequel le dispositif de provisionnement est une carte de justificatif.

4. Élément sécurisé selon la revendication 1, dans lequel l'élément sécurisé comprend deux canaux de communication, un premier des deux canaux étant en communication avec un initiateur (212) et un second des deux canaux étant en communication avec un dispositif (204) comprenant le dispositif de codage.

5. Élément sécurisé selon la revendication 4, dans lequel le premier canal utilise un protocole de communication USB et le second canal utilise un protocole de communication série.

6. Système comprenant.
un dispositif de codage ; et
un élément sécurisé tel que défini dans l'une des revendications précédentes.

7. Système selon la revendication 6, dans lequel le dispositif de provisionnement est une carte de justificatif (116).

8. Système selon la revendication 7, dans lequel le dispositif de codage n'est autorisé à approvisionner qu'un nombre prédéterminé de cartes de justificatif (116) avant que l'élément sécurisé ne commence à restreindre la capacité du dispositif de codage à approvisionner des cartes de justificatif (116).

9. Système selon la revendication 6, comprenant en outre :
un initiateur (212) adapté pour s'interfacer avec un utilisateur administratif, dans lequel l'initiateur est en outre adapté pour fournir un ou plusieurs messages au dispositif de codage ordonnant au dispositif de codage d'approvisionner un justificatif d'identité.

10. Système selon la revendication 9, dans lequel l'élément sécurisé réside dans l'initiateur et l'initiateur est capable de récupérer les règles de codage et de fournir les règles de codage au dispositif de codage via le canal de communication sécurisé.

11. Procédé qui comprend les étapes consistant à :
recevoir, au niveau d'un dispositif de codage, des instructions pour approvisionner des données sensibles à un dispositif de provisionnement,
récupérer, par le dispositif de codage, des règles de codage et des données sensibles à partir d'un élément sécurisé via un canal de communication sécurisé, en réponse à l'élément sécurisé recevant une demande pour les règles de codage et les données sensibles, dans lequel les règles de codage définissent la manière dont les données sont stockées dans le dispositif de provisionnement ; et
utiliser les informations récupérées à partir de l'élément sécurisé pour approvisionner les données sensibles au dispositif de provisionnement,
dans lequel l'élément sécurisé est un dispositif périphérique au dispositif de codage.
